Europäisches Patentamt

European Patent Office

Office européen des brevets

(19)

(11) Veröffentlichungsnummer: **0 252 996 B1**

# (12) EUROPÄISCHE PATENTSCHRIFT

(45) Veröffentlichungstag der Patentschrift:
**31.07.91 Patentblatt 91/31**

(51) Int. Cl.5 : **B01D 29/11**

(21) Anmeldenummer: **87900741.7**

(22) Anmeldetag: **17.12.86**

(86) Internationale Anmeldenummer:
**PCT/SU86/00133**

(87) Internationale Veröffentlichungsnummer:
**WO 87/03822 02.07.87 Gazette 87/14**

(54) **VORRICHTUNG ZUR FILTRATION EINER FLUESSIGKEIT.**

(30) Priorität: **24.12.85 SU 3988604**
**24.12.85 SU 3988605**
**24.12.85 SU 3988612**

(43) Veröffentlichungstag der Anmeldung:
**20.01.88 Patentblatt 88/03**

(45) Bekanntmachung des Hinweises auf die
Patenterteilung:
**31.07.91 Patentblatt 91/31**

(84) Benannte Vertragsstaaten:
**AT DE FR GB IT**

(56) Entgegenhaltungen:
**DE-A- 41 969**
**DE-A- 64 359**
**FR-A- 2 383 130**
**US-A- 3 254 772**

(73) Patentinhaber: **TREST 'JUZHVODOPROVOD'**
**ul. Gagarina, 135/1**
**Krasnodar, 350049 (SU)**

(72) Erfinder: **SHISHKIN, Viktor Vasilievich**
**ui. Festivalnaya, 16-5**
**Krasnodar, 350049 (SU)**
Erfinder: **KRYAZHEVSKIKH, Nikolai**
**Fedorovich**
**ul. Krasnykh partizan, 559-13**
**Krasnodar, 350049 (SU)**
Erfinder: **SHAPOVALOV, Jury Petrovich**
**ul. Turgeneva, 18**
**Krasnodar, 350049 (SU)**

(74) Vertreter: **Finck, Dieter et al**
**Patentanwälte v. Füner, Ebbinghaus, Finck**
**Mariahilfplatz 2 & 3**
**W-8000 München 90 (DE)**

EP 0 252 996 B1

**Beschreibung**

Die Erfindung betrifft eine Filtervorrichtung zum Filtern einer Flüssigkeit, mit einem Gehäuse, mit einem schlauchförmigen, unter Bildung eines Ringraums stülpbaren Filterelement, das mit seinem einen Ende mit einer oberhalb des Filterelements angeordneten Antriebsrolle verbunden ist und mit der Innenseite seines anderen Endes am Umfang eines in dem Gehäuse angeordneten Hohlkörpers befestigt ist, der mit dem Gehäuse einen ringförmigen Zwischenraum bildet, mit einer Zuführeinrichtung für eine Zuführung einer zu filternden Flüssigkeit und einer Ableiteinrichtung für ein Ableiten einer gereinigten Flüssigkeit, die jeweils mit dem Gehäuse in Verbindung stehen und mit einer Abführeinrichtung für eine Rückstandsabführung, die mit dem ringförmigen Zwischenraum verbunden ist.

Eine solche, aus der CH-A-500747 bekannte Filtervorrichtung weist einen äußeren, konischen und durchlässigen Gehäuseteil und einen in diesem konzentrisch angeordneten, zylindrischen und durchlässigen inneren Gehäuseteil auf. Zwischen diesen Gehäuseteilen ist als Filterelement ein schlauchförmiges Filtertuch angeordnet, dessen Ränder an den oberen Enden der beiden Gehäuseteile befestigt sind. Diese Filtervorrichtung ist in ihrer Filtrierstellung durch einen Deckflansch verschlossen. Das zu filtrierende Medium wird über durch den Deckflansch hindurchgehende Zuführleitungen in den von dem Filtertuch gebildeten Ringraum solange geführt und durch das Filtertuch gefiltert, bis der Ringraum mit Rückstand gefüllt ist. Dabei wird der Wirkungsgrad der Filterung ständig geringer, da die Filterfläche mit größer werdendem Rückstand kleiner wird. Nach Abschluß einer Filterperiode wird der Deckflansch zusammen mit dem inneren Gehäuseteil durch eine äußere Hebevorrichtung angehoben, wodurch das Filtertuch gestreckt und für seine Reinigung von außen zugänglich ist. Da das Filtertuch dieser Filtervorrichtung schnell verstopft ist, ist eine häufige Reinigung des Filtertuchs notwendig. Der Wirkungsgrad dieser Filtervorrichtung ist also gering. Außerdem können mit dieser Filtervorrichtung keine stark riechenden oder giftige Stoffe gefiltert werden, da sie sowohl bei der Filtrierung als auch bei der Reinigung ins Freie austreten können.

Der Erfindung liegt die Aufgabe zugrunde, mit konstruktiv einfachen Mitteln eine Filtervorrichtung zu schaffen, mit der mit hohem Wirkungsgrad auch Stoffe mit starkem Geruch oder giftige Stoffe gefahrlos gefiltert werden können.

Diese Aufgabe wird ausgehend vom gattungsgemäßen Stand der Technik dadurch gelöst, daß das Gehäuse geschlossen und druckdicht ist, daß der Hohlkörper zylindrisch ist und daß die Antriebsrolle innerhalb des Gehäuses angeordnet und ihr Drehmoment so regelbar ist, daß bei Erreichen eines Solldrucks der Flüssigkeit das Filterelement abgesenkt wird.

Die druckdichte Ausführung des Gehäuses ermöglicht es, Stoffe mit starkem Geruch oder giftige Stoffe gefahrlos zu filtern. Dabei kann der Wirkungsgrad der Filtervorrichtung erhöht werden, wenn in dem Raum oberhalb des Filterelements ein erhöhter Druck und in dem Raum unterhalb des Filterelements ein Unterdruck erzeugt wird. Dadurch, daß die Hebevorrichtung innerhalb des Gehäuses angeordnet ist, kann das Filterelement während des Filtriervorgangs abhängig von der Rückstandsmenge so bewegt werden, daß ständig eine saubere Filtrierfläche zur Verfügung steht. Dies erhöht zusätzlich den Wirkungsgrad der Filtervorrichtung.

Zweckmäßigerweise ist das Filterelement an der Außenfläche des zylindrischen Hohlkörpers befestigt.

Für eine gute Spülung des Filterelements weist die Mantelfläche des zylindrischen Hohlkörpers Durchgangsbohrungen auf und steht der zylindrische Hohlkörper mit der Zuführeinrichtung in Verbindung.

Es ist günstig, eine entlang des zylindrischen Hohlkörpers verschiebbare Hülse koaxial und mit Spiel zu dem zylindrischen Hohlkörper in dem Ringraum des Filterelements anzuordnen.

Bei einer bevorzugten Ausführungsform der erfindungsgemäßen Filtervorrichtung ist im unteren Bereich des Gehäuses ein Behälter angeordnet ist, der über Rohre mit dem oberen Bereich des Gehäuses in Verbindung steht, in dem eine Leitrinne so angeordnet ist, daß durch sie ein aus den Rohren austretender Füllstoff in den Ringraum geschüttet wird.

Eine weitere vorteilhafte Ausführungsform weist einen in dem zylindrischen Hohlkörper auf Höhe der Befestigung des anderen Endes des Filterelements angeordneten, aufblasbaren elastischen Hohlring auf.

Die Filtervorrichtung kann zur Entschlammung von Industrieabwässern, zur Reinigung von Kanalisationsabflüssen und zur Reinigung von Umlauf- und Trinkwasser verwendet werden. Außerdem kann sie zur Trennung von Abflüssen von Viehzuchtfarmen in eine feste und eine flüssige Fraktion sowie zur Abtrennung von Faulschlamm bei der Kanal- und Waserbeckenreinigung benutzt werden.

Ausführungsbeispiele der Erfindung werden nachstehend anhand von Zeichnungen näher erläutert. Es zeigt :

Fig. 1    im Längsschnitt eine erste Ausführungsform einer Filtervorrichtung ;
Fig. 2    eine zweite Ausführungsform der Filtervorrichtung ;
Fig. 3    die Filtervorrichtung von Fig. 2 mit in Spülstellung befindlichem Filterelement ;

Fig. 4   eine dritte Ausführungsform der Filtervorrichtung ;

Fig. 5   die Filtervorrichtung von Fig. 4 mit in Spülstellung befindlichem Filterelement.

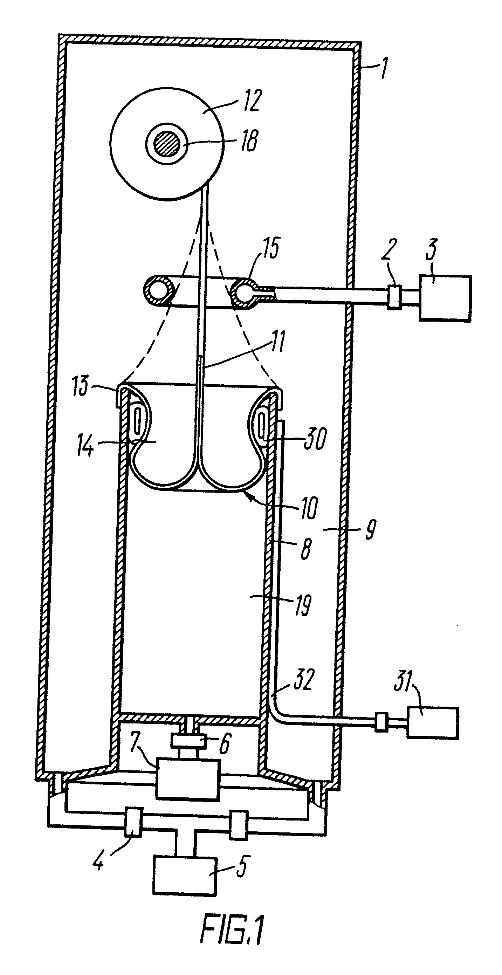

Die in den Fig. 1 bis 5 gezeigte, periodisch wirkende Filtervorrichtung zum Filtern einer Flüssigkeit weist ein druckdicht abgeschlossenes Gehäuse 1 auf, das über ein Rückschlagventil 2 mit einer Zuführeinrichtung 3 für die Zuführung einer zu filtrierenden Flüssigkeit, (Filtrierflüssigkeit) über ein Ventil 4 mit einer Abführeinrichtung 5 für die Rückstandsabführung und über ein Ventil 6 mit einer Ableiteinrichtung 7 für das Ableiten einer gereinigten Flüssigkeit in Verbindung steht.

Im Gehäuse 1 sind ein Hohlzylinder 8, der mit dem Gehäuse 1 einen an die Abführeinrichtung 5 angeschlossenen ringförmigen Zwischenraum 9 bildet, und ein biegsames schlauchförmiges Filterelement 10 angeordnet.

Mit einem Ende 11 ist das Filterelement 10 an einer im Oberteil des Gehäuses 1 angeordneten Antriebstrommel 12 befestigt, während sein anderes Ende 13 mit der Innenseite nach außen gestülpt und längs des Umfanges am Hohlzylinder 8 befestigt ist, wodurch ein Ringraum 14 um den restlichen Abschnitt des Filterelements 10 gebildet wird, in den die Filtrierflüssigkeit zur Filterung zugeführt wird.

Durch eine derartige Befestigung der Enden des Filterelements 10 ist es relativ zu seiner Befestigungsstrecke verschiebbar. Der Ringraum 14 verändert sein Volumen während der Speicherung des darin anfallenden Rückstandes und der Verschiebung des Filterelements durch die Antriebstrommel 12.

Gemäß Fig. 1 ist das mit der Innenseite nach außen gestülpte Ende 13 des Filterelements 10 am offenen Ende des Hohlzylinders 8 befestigt und in den Zylinderraum gesenkt. Der Ringraum 14 vergrößert sich unter dem Einfluß des darin gespeicherten Rückstandes oder verringert sich bei der Aufwärtsbewegung des Filterelements 10 im Hohlzylinder 8. Der Hohlraum des Hohlzylinders 8 steht in seinem unteren Bereich mit der Ableiteinrichtung 7 für gereinigte Flüssigkeit in Verbindung. Oberhalb des Hohlzylinders 8 ist ein Ringstutzen 15 der Zuführeinrichtung 3 angeordnet, durch den das Filterelement 10 hindurchgeführt ist.

Das Ende 13 des Filterelements 10 ist an der Außenfläche des Hohlzylinders 8 beispielsweise durch Kleben, oder Befestigungsteile usw. befestigt.

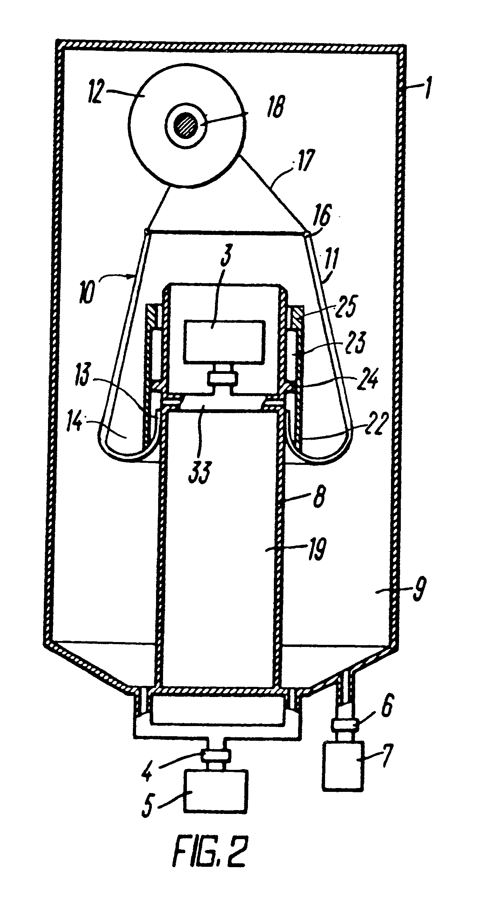

Das Ende 11 des Filterelements 10 kann unmittelbar an der Antriebstrommel 12 oder an einem steifen Ring 16 (Fig. 2 bis 5) befestigt werden, an dem auf die Antriebstrommel 12 aufgewickelte Seile 17 befestigt sind.

Zur Drehung der Antriebstrommel 12 wird ein Reversierantrieb verwendet, der einen (nicht dargestellten) Elektromotor, und eine (nicht dargestellte) zum Heben und falls notwendig, zum Senken des Filterelements 10 bestimmte, mit der Welle der Antriebstrommel 12 gekuppelte Kupplung aufweist. Die Antriebstrommel 12 ist mit einer Einrichtung 18 versehen, die ihr Drehmoment je nach dem Solldruck regelt, der durch die Filtrierflüssigkeit und den in dem Ringraum 14 des Filterelements 10 befindlichen Rückstand auf das Filterelement 10 ausgeübt wird. Als solche Einrichtung kann beispielsweise ein Klinken- oder Reibgesperre dienen.

Je nach dem gewählten Filtrationsschema oder Reinigungsgrad der Flüssigkeit kann sich das Filterelement 10 während des Filtrationsvorganges entweder im Hohlraum 19 des Hohlzylinders 8 (Fig. 1), oder über seine Außenfläche, (Fig. 2 bis 5) im Ringraum 9 des Gehäuses 1 verschieben.

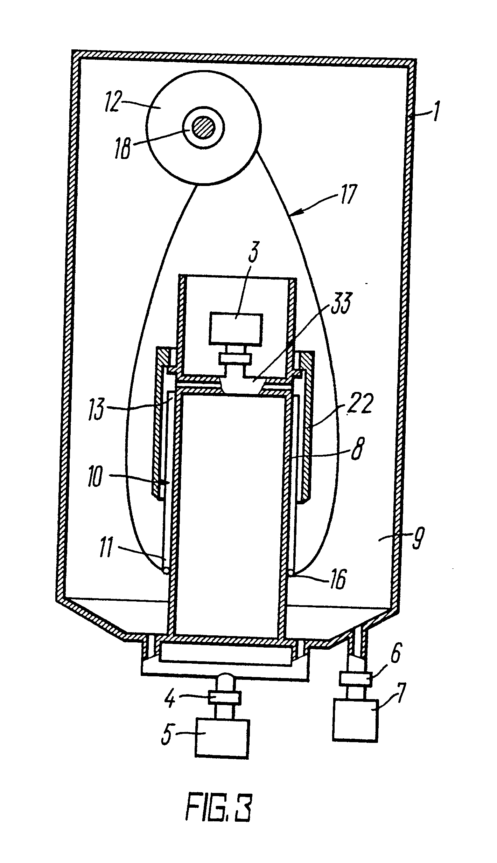

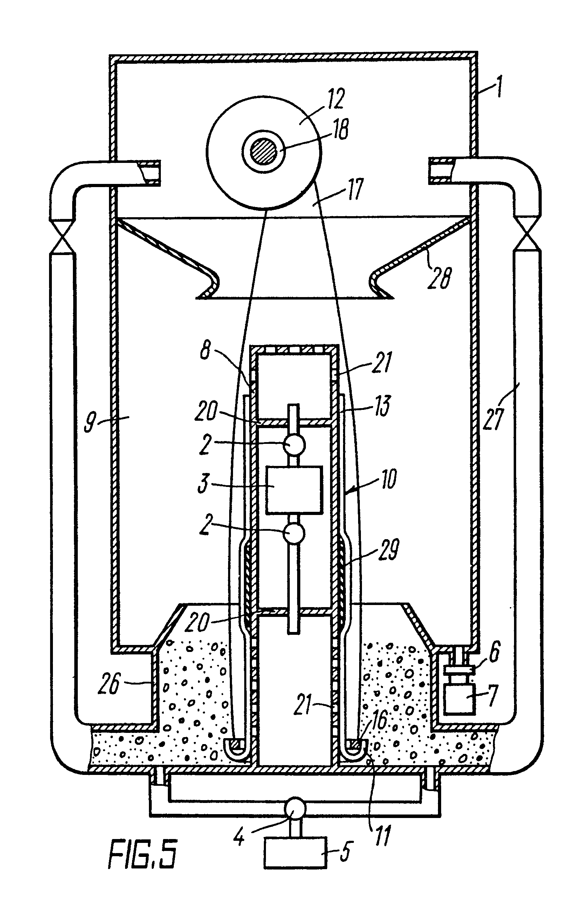

Bei allen Ausführungsformen wird das Filterelement 10 bei der Entfernung des Filterrückstandes aus dem Ringraum 14 über die Außenfläche des Hohlzylinders 8 geführt, wobei das Ende 11 im Unterteil des Gehäuses zu liegen kommt, wie es die Fig. 3 und 5 zeigen.

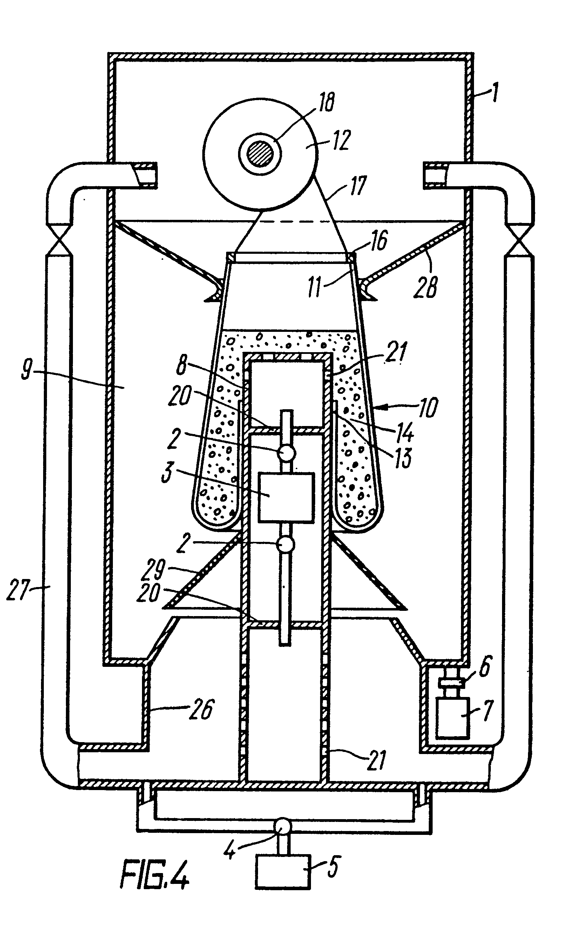

Die Zuleitung der Filtrierflüssigkeit kann über den Hohlzylinder 8 erfolgen, wie Fig. 2 bis 5 zeigt. Dazu ist die Zuführeinrichtung 3 im Hohlraum 19 des Hohlzylinders 8 untergebracht. Der Hohlraum 19 ist durch Trennwände 20 (Fig. 4, 5) in Sektionen geteilt. Zum Ausströmen der Filtrierflüssigkeit sind Durchgangsbohrungen 21 im Hohlzylinder 8 vorgesehen.

Zur Beschleunigung des Filtervorganges ist eine Hülse 22 im Ringraum 14 (Fig. 2, 3) des Filterelements 10 koaxial zum Hohlzylinder 8 angeordnet. Bezüglich des Hohlzylinder 8 und des daran befestigten Endes 13 des Filterelementes 10 ist die Hülse 22 mit einem Spiel 23 angeordnet, wodurch sie sich zusammen mit dem Filterelement 10 entlang des Hohlzylinders 8 verschieben kann. Zur Begrenzung der Verschiebung der Hülse 22 ist am Hohlzylinder 8 ein Ringanschlag 24 und an der Hülse 22 ein Bund 25 vorgesehen.

In der Filtervorrichtung kann die Flüssigkeit mit Hilfe eines schüttbaren Füllstoffs, wie beispielsweise Sand, Kies, Füllkörper, Fasern usw. gefiltert werden. Dazu ist bei der Filtervorrichtung ein an die Abführeinrichtung 5 angeschlossener Behälter 26 (Fig. 4, 5) im Unterteil des Gehäuses 1 vorgesehen. Der Unterteil dieses Behälters 26 steht über mit Überlaufventilen versehene Rohre 27 mit dem Oberteil des Gehäuses 1 in Verbindung. Durch die Rohre 27 wird der Füllstoff (Filtermittel) auf eine beliebige bekannte Weise dem Oberteil des Gehäuses 1 zugeführt, wo er über eine Leitrinne 28 in den Ringraum 14 des Filterelements 10 geleitet wird. Dabei ist zum Ableiten der gereinigten Flüssigkeit in die mit dem ringförmigen Zwischenraum 9 des Gehäuses 1 verbundene Ableiteinrichtung 7 eine biegsame, beispielsweise aus Gummi bestehende Hülle 29 vorgesehen, die am Hohlzylinder 8 befestigt ist und die Einströmöffnung des Behälters 26 überdeckt. Durch ihre Elastizität drückt sich die Hülle 29 unter Einwirkung des sich mit der Innenseite nach außen wendenden Filterelementes

EP 0 252 996 B1

10 mit Füllstoff und Flüssigkeit gegen den Hohlzylinder 10, wodurch das Ende 11 des Filterelements 10 frei herabsinken und den Füllstoff samt Rückstand in den Behälter 26 ausschütten kann. Nach der Aufwärtsbewegung des Schlauches in die Ausgangsstellung stellt die Hülle 29 ihre Form wieder her.

Bei der in Fig. 1 gezeigten Ausführungsform ist die Filtervorrichtung mit einer Einrichtung versehen, die das schlauchförmige Filterelement 10 nach der Filterung mit der Innenseite nach außen über die Außenseite des Hohlzylinders 8 stülpt, wodurch der Rückstand von der Filterfläche am vollständigsten entfernt und die Oberfläche des Filterelements 10 gespült werden kann. Diese Einrichtung besteht aus einem elastischen Hohlring 30, der im Hohlraum des Hohlzylinders 8 auf Höhe der Befestigung des Filterelements 10 angeordnet ist un mit Hilfe eines flexiblen Schlauches 32 mit einem Druckluftsystem 31 in Verbindung steht. Unter der Lufteinwirkung nimmt der Hohlring 30 in seiner Größe zu und überdeckt den Hohlzylinder 8, wodurch das vorläufig in die durch die punktierte Linie angedeutete Stellung gehobene Filterelement 10 über die Außenfläche des Hohlzylinders 8 geführt wird, wobei der flexible Schlauch 32 die Verschiebung des Filterelements 10 nicht hindert.

Die Filtervorrichtung von Fig. 1 wird wie folgt betrieben.

Mit der Zuführeinrichtung 3 wird durch den Ringstutzen 15 dem druckdichten Gehäuse 1 die Filtrierflüssigkeit zugeführt, die in den Ringraum 14 des schlauchförmigen Filterelements 10 einströmt und durch das Filterelement 10 gefiltert wird, während der Rückstand im Ringraum 14 bleibt. Die gereinigte Flüssigkeit strömt in die Ableiteinrichtung 7 ein. Je nach Verschmutzung der Filterfläche des Filterelements sammelt sich der Rückstand und die Filtrierflüssigkeit im Ringraum 14 an. Bei Erreichen des Solldrucks der Filtrierflüssigkeit spricht die Einrichtung 18 an, wodurch sich die Antriebstrommel 12 dreht und der verschmutzte Oberflächenabschnitt des Filterelements 10 niedergeht und zur Innenfläche des Hohlzylinders 8 wandert. In die Filtrationszone gelangt so eine reine Oberfläche des Filterelements 10, wodurch das Volumen des Ringraumes 14 des Filterelements 10 vergrößert wird. Nachdem von der Antriebstrommel 12 die der Zylinderhöhe entsprechende Schauchlänge des Filterelements 10 zugeführt worden ist, wird der Antrieb der Antriebstrommel 12 eingeschaltet und das Filterelement 10 auf die Antriebstrommel 12 aufgewickelt. Nach der Aufwärtsbewegung des Filterelements 10 (seine Stellung ist durch die punktierte Linie gezeigt) wird in den elastischen Hohlring 30 Druckluft gefördert, die ihn so aufbläst, daß er den Hohlraum des Hohlzylinders 8 überdeckt. Durch Umschalten des Trommelantriebs wird dann das Filterelement 10 gesenkt. Unter Einwirkung des auf seiner Oberfläche befindlichen Rückstandes sinkt das Filterelement 10 längs der Außenfläche des Hohlzylinders 8 herab und wendet sich mit der Innenseite nach außen, so daß das Ende 11 des Filterelements 10 im Unterteil des Gehäuses 1 zu liegen kommt. Dabei befindet sich der Rückstand auf der offenen Seite des Filterelements 10. Unter Einwirkung der Filtrier- bzw. Spülflüssigkeit wird der Rückstand von der Oberfläche des Filterelements 10 weggespült und der Abführeinrichtung 5 zugeleitet. Nach der Spülung des Filterelements beginnt sich die Antriebstrommel 12 entgegengesetzt zu drehen und das Filterelement 10 aufzuwickeln. Nach der Aufwärtsbewegung des Filterelements 10 wird aus dem elastischen Hohlring 30 Luft abgelassen und das Filterelement 10 in den Hohlraum 19 des Hohlzylinders 8 gesenkt. Der Filtrationszyklus wiederholt sich.

Die Filtervorrichtung von Fig. 2 und 3 wird wie folgt betrieben.

Die Filtrierflüssigkeit strömt von der Zuführeinrichtung 3 durch einen im Hohlzylinder 8 angeordneten Stutzen 33 durch den Ringspalt 23 zwischen der Hülse 22 und dem an der Außenseite des Hohlzylinders 8 befestigten Ende 13 des Filterelements 10 in den Ringraum 14 ein und wird durch das Filterelement 10 gefiltert, wobei die reinen Abschnitte des Filterelements 10 während des Filterungsvorganges genauso wie bei der Ausführungsform gemäß Fig. 1 zugeführt werden. Nachdem sich das Ventil 6 geschlossen hat und das Ende 11 des Filterelements 10 mit dem Ring 16 in die untere Endstellung gebracht ist, d.h., nachdem sich das Filterelement 10 vollständig an der Außenfläche des Hohlzylinders 8 mit der Innenseite nach außen gewendet hat (Fig. 3), öffnet sich das Ventil 4, und die Flüssigkeit strömt mit dem Rückstand in die Abführeinrichtung 5 ein, wobei die Filtrier- bzw. Spülflüssigkeitsstrahlen beim Durchfließen des Ringspaltes 23 den Rückstand von der Oberfläche des Filterelements 10 wegspülen. Danach schließt sich das Ventil 4, und das Ventil 6 öffnet sich. Die Antriebstrommel 12 beginnt sich entgegengesetzt zu drehen, wodurch sich das Ende 11 des Filterelements 10 zusammen mit der Hülse 22 aufwärtsbewegt. Wieder bildet sich der Ringraum 14 aus und vergrößert sein Volumen. Die Filtrierflüssigkeit wird wieder dem Ringraum 14 zugeführt. Der Filtrationszyklus wiederholt sich.

Die Filtervorrichtung von Fig. 4 und 5 funktioniert genauso wie die Filtervorrichtungen von Fig. 2 und 3. Gleichzeitig mit dem Senken des Endes 11 und dem Wenden des Filterelements 10 über die Außenfläche des Hohlzylinders 8 drückt sich die Hülle 29 gegen den Hohlzylinder 8. Aus dem Ringraum 14 werden der Füllstoff und der Rückstand in den Behälter 26 geschüttet. Über die Durchgangsbohrungen 21 im Unterteil des Hohlzylinders 8 fließt die Filtrier- bzw. Spülflüssigkeit durch das Filterelement 10 und reinigt es. Durch die Drehung der Antriebstrommel 12 wird danach das Ende 11 des Filterelements 10 in die Ausgangsstellung gehoben, wie es in Fig. 4 gezeigt ist. Der Rückstand wird gemeinsam mit der Flüssigkeit in die Abführeinrichtung 5 geleitet. Der gereinigte Füllstoff wird über die Rohre 27 dem Oberteil des Gehäuses 1 zugeleitet und über die Leitrinne

4

28 in den Ringraum 14 geschüttet. Durch die Bohrungen 21 im Oberteil des Zylinders strömt das zu filternde Medium in den Ringraum 14 ein, durchfließt den Füllstoff und das Filterelement und wird durch die Hülle 29 der Ableiteinrichtung 7 zugeleitet.

## Patentansprüche

1. Filtervorrichtung zum Filtern einer Flüssigkeit,
— mit einem Gehäuse (1),
— mit einem schlauchförmigen, unter Bildung eines Ringraums (14) stülpbaren Filterelement (10), das mit seinem einen Ende (11) mit einer oberhalb des Filterelements (10) angeordneten Antriebsrolle (12) verbunden ist und mit der Innenseite seines anderen Endes (13) am Umfang eines in dem Gehäuse (1) angeordneten Hohlkörpers (8) befestigt ist, der mit dem Gehäuse (1) einen ringförmigen Zwischenraum (9) bildet,
— mit einer Zuführeinrichtung (3) für eine Zuführung einer zu filternden Flüssigkeit und einer Ableiteinrichtung (7) für ein Ableiten einer gereinigten Flüssigkeit, die jeweils mit dem Gehäuse (1) in Verbindung stehen und
— mit einer Abführeinrichtung (5) für eine Rückstandsabführung, die mit dem ringförmigen Zwischenraum (9) verbunden ist, dadurch **gekennzeichnet,**
— daß das Gehäuse (1) geschlossen und druckdicht ist,
— daß der Hohlkörper (8) zylindrisch ist und
— daß die Antriebsrolle (12) innerhalb des Gehäuses (1) angeordnet und ihr Drehmoment so regelbar ist, daß bei Erreichen eines Solldrucks der Flüssigkeit das Filterelement (10) abgesenkt wird.

2. Filtervorrichtung nach Anspruch 1, dadurch **gekennzeichnet,** daß das Filterelement (10) an der Außenfläche des zylindrischen Hohlkörpers (8) befestigt ist.

3. Filtervorrichtung nach Anspruch 1 oder 2, dadurch **gekennzeichnet,** daß die Mantelfläche des zylindrischen Hohlkörpers (8) Durchgangsbohrungen (21) aufweist und daß der zylindrische Hohlkörper (8) mit der Zuführeinrichtung (3) in Verbindung steht.

4. Filtervorrichtung nach einem der Ansprüche 1 bis 3, dadurch **gekennzeichnet,** daß eine entlang des zylindrischen Hohlkörpers (8) verschiebbare Hülse (22) koaxial und mit Spiel zu dem zylindrischen Hohlkörper (8) in dem Ringraum (14) des Filterelements (10) angeordnet ist.

5. Filtervorrichtung nach einem der Ansprüche 1 bis 3, dadurch **gekennzeichnet,** daß im unteren Bereich des Gehäuses (1) ein Behälter (26) angeordnet ist, der über Rohre (27) mit dem oberen Bereich des Gehäuses (1) in Verbindung steht, in dem eine Leitrinne (28) so angeordnet ist, daß durch sie ein aus den Rohren (27) austretender Füllstoff in den Ringraum (14) geschüttet wird.

6. Filtervorrichtung nach Anspruch 1, **gekennzeichnet** durch einen in dem zylindrischen Hohlkörper (8) auf Höhe der Befestigung des anderen Endes (13) des Filterelements (10) angeordneten, aufblasbaren elastischen Hohlring (30).

## Claims

1. Filtering apparatus for filtering a liquid,
— having a housing (1),
— having a hose-shaped filter element (10) which may be turned up to form an annular space (14), which is connected by means of one end (11) to a drive roller (12) arranged above the filter element (10), and which is secured by means of the inside of its other end (13) to the periphery of a hollow body (8) arranged in the housing (1) and forming an annular intermediate space (9) with the housing (1),
— having a supply apparatus (3) for supplying a liquid to be filtered and a draining-off apparatus (7) for draining off a cleaned liquid, each of these being connected to the housing (1), and
— having a removal apparatus (5) for removing a remaining amount, connected to the annular intermediate space (9), characterized
— in that the housing (1) is closed and pressure-tight,
— in that the hollow body (8) is cylindrical, and
— in that the drive roller (12) is arranged within the housing (1) and its torque is regulable such that when a set pressure of the liquid is reached the filter element (10) is lowered.

2. Filtering apparatus according to Claim 1, characterized in that the filter element (10) is secured to the outer face of the cylindrical hollow body (8).

3. Filtering apparatus according to Claim 1 or 2, characterized in that the casing surface of the cylindrical hollow body (8) has through bores (21), and in that the cylindrical hollow body (8) is connected to the supply apparatus (3).

4. Filtering apparatus according to one of Claims 1 to 3, characterized in that a sleeve (22) displaceable along the cylindrical hollow body (8) is arranged coaxially and with play with respect to the cylindrical hollow body (8) in the annular space (14) of the filter element (10).

5. Filtering apparatus according to one of Claims 1 to 3, characterized in that there is arranged in the lower region of the housing (1) a container (26) which is connected via tubes (27) to the upper region of the housing (1), in which a guide channel (28) is arranged such that filling material emerging from the tubes (27) is heaped by it into the annular space (14).

6. Filtering apparatus according to Claim 1, characterized by an inflatable, resilient hollow ring (30) which is arranged in the cylindrical hollow body (8) at the level at which the other end (13) of the filter element (10) is secured.

**Revendications**

1. Dispositif de filtrage pour la filtration d'un liquide,
— avec un boîtier (1),
— avec un élément de filtre (10) en forme de tuyau souple pouvant être retourné avec formation d'un espace annulaire (14) et qui est relié par l'une (11) de ses extrémités à une poulie d'entraînement (12) disposée au-dessus de l'élément de filtre (10) et est fixé par la face intérieure de son autre extrémité (13) à la périphérie d'un corps creux (8) disposé dans le boîtier (1) et qui forme, avec le boîtier (1), un espace intermédiaire annulaire (9),
— avec un système d'amenée (3) pour une amenée d'un liquide à filtrer et un système de départ (7) pour la décharge d'un liquide purifié, qui sont respectivement en communication avec le boîtier (1) et
— avec un système d'évacuation (5) pour une évacuation de refus résiduel, qui est relié à l'espace intermédiaire annulaire (9), caractérisé
— en ce que le boîtier (1) est clos et étanche à la pression,
— en ce que le corps creux (8) est cylindrique et
— en ce que la poulie d'entraînement (12) est disposée intérieurement au boîtier (1) et son couple de rotation est réglable de telle façon que, lors de l'obtention d'une pression prescrite de consigne du liquide, l'élément de filtre (10) est abaissé.

2. Dispositif de filtrage selon la revendication 1, caractérisé en ce que l'élément de filtre (10) est fixé à la surface extérieure du corps creux cylindrique (8).

3. Dispositif de filtrage selon la revendication 1 ou 2, caractérisé en ce que la surface latérale du corps creux cylindrique (8) comporte des orifices percés traversants (21) et en ce que le corps creux cylindrique (8) est en communication avec le système d'amenée (3).

4. Dispositif de filtrage selon l'une des revendications 1 à 3, caractérisé en ce qu'une douille (22), déplaçable le long du corps creux cylindrique (8), est montée coaxialement et avec jeu relativement au corps creux cylindrique (8) dans l'espace annulaire (14) de l'élément de filtre (10).

5. Dispositif de filtrage selon l'une des revendications 1 à 3, caractérisé en ce que dans la partie inférieure du boîtier (1) est disposé un réservoir (26) qui est en communication par l'intermédiaire de tubes (27) avec la partie supérieure du boîtier (1), dans laquelle une goulotte directrice (28) est montée de telle façon que, par elle, une matière de remplissage, sortant des tubes (27), est déversée dans l'espace annulaire (14).

6. Dispositif de filtrage selon la revendication 1, caractérisé par un anneau creux élastique gonflable (30) monté dans le corps creux cylindrique (8) au niveau de la fixation de l'autre extrémité (13) de l'élément de filtre (10).

FIG.1

FIG. 2

FIG. 3

FIG.4

FIG.5